# EUROPEAN PATENT APPLICATION

(11) **EP 4 270 986 A1**
(43) Date of publication of application: **01.11.2023**
(21) Application number: 22170780.5
(22) Date of filing: 29.04.2022
(51) Int. Cl.: H04R 3/00

(54) **SPEAKERPHONE WITH SOUND QUALITY INDICATION**

(71) Applicant: GN Audio A/S, 2750 Ballerup (DK)
(72) Inventor: HERNANDEZ GARCIA, Diego Jose, 2750 Ballerup (DK); ERIKSEN, Mads Bille, DK-2750 Ballerup (DK); VON BARNER, Jørgen Daucke, DK-2750 Ballerup (DK)
(74) Representative: Zacco Denmark A/S

(57) **Abstract**

Disclosed is a speakerphone configured for performing a sound quality estimation, the speakerphone is configured to be arranged at a location and for enabling one or more in-location persons, including at least a first person, to communicate orally with one or more far-end callers, the speakerphone comprising: a housing; a set of acoustic input transducers, including at least a first acoustic input transducer and a second acoustic input transducer, configured for reception of sound from the location; one or more acoustic output transducers configured for transmission of sound to the location; a speech quality estimator configured for estimating a speech quality level of the sound received from the location; a visual indicator configured for emitting and/or reflecting light to provide different visual patterns; a speech detector configured for determining the direction of arrival of speech from one or more of the one or more in-location persons speaking; wherein the visual indicator is configured to provide at least two different first visual patterns indicating respective directions of arrival of speech determined by the speech detector; wherein further, the visual indicator is configured to provide at least two different second visual patterns indicating respective speech quality levels estimated by the speech quality estimator.

## Description

### FIELD

The present invention relates to a speakerphone configured for performing a sound quality estimation. The speakerphone is configured to be arranged at a location and for enabling one or more in-location persons, including at least a first person, to communicate orally with one or more far-end callers.

### BACKGROUND

Speakerphones are used in teleconferences and videoconferences, typically in meeting rooms where more persons will be speaking during the teleconference, and the speech is then transmitted via the speakerphone to one or more far-end callers. However, it is a problem that the persons in the meeting room who are speaking may not know whether their speech is transmitted to the far-end caller unless the far-end caller person gives some indication or feedback to the persons speaking.

Thus, there is a need for an improved speakerphone.

### SUMMARY

Disclosed is a speakerphone configured for performing a sound quality estimation. The speakerphone is configured to be arranged at a location and for enabling one or more in-location persons, including at least a first person, to communicate orally with one or more far-end callers. The speakerphone comprises a housing. The speakerphone comprises a set of acoustic input transducers, including at least a first acoustic input transducer and a second acoustic input transducer, configured for reception of sound from the location. The speakerphone comprises one or more acoustic output transducers configured for transmission of sound to the location. The speakerphone comprises a speech quality estimator configured for estimating a speech quality level of the sound received from the location. The speakerphone comprises a visual indicator configured for emitting and/or reflecting light to provide different visual patterns. The speakerphone comprises a speech detector configured for determining the direction of arrival of speech from one or more of the one or more in-location persons speaking. The visual indicator is configured to provide at least two different first visual patterns indicating respective directions of arrival of speech determined by the speech detector. The visual indicator is configured to provide at least two different second visual patterns indicating respective speech quality levels estimated by the speech quality estimator.

It is an advantage that the speakerphone comprises a speech quality estimator configured for estimating a speech quality level of the sound received from the location, and that the speakerphone comprises a visual indicator configured to provide at least two different second visual patterns indicating respective speech quality levels estimated by the speech quality estimator, since hereby the in-location person(s) receive indication or feedback from the speakerphone about the estimated speech quality level of the sound received from the location. The in-location person(s) may not be able to hear themselves whether the quality of their speech as received by the speakerphone is good or bad.

In prior art situations, the in-location persons had to ask the far-end callers whether the far-end callers could hear the in-locations persons and whether the sound quality was acceptable. Thus, in the prior art, the in-location person, who was talking and transmitting the speech signal via the speakerphone to the far-end caller, did not know if the far-end caller was receiving and hearing the speech signal unless the far-end caller person gave some indication or feedback to the in-location person.

Thus, it is an advantage of the present speakerphone that now the in-locations persons can visually see for themselves, on the speakerphone, what the estimated speech quality level of the sound received from the location is, i.e. whether the estimated speech quality is good or bad. This is possible due to the visual indicator on the speakerphone, as the visual indicator is configured to provide at least two different second visual patterns indicating respective speech quality levels estimated by the speech quality estimator.

Furthermore, it is an advantage that the visual indicator configured to provide at least two different second visual patterns indicating respective speech quality levels can be used as a privacy mode indicator by the in-location persons. This is because if the estimated speech quality level is low, i.e. the speech quality is bad and/or no speech is transmitted to the far-end callers, then the in-location persons can assume that the far-end callers cannot hear what the in-location persons are saying and thereby the speakerphone may be in a privacy mode. This may occur e.g. when the in-location persons are whispering or speaking very soft, and/or if they are further away from the speakerphone.

Yet further, it is an advantage of the speakerphone that the visual indicator is configured to provide at least two different first visual patterns indicating respective directions of arrival of speech determined by the speech detector, since hereby the in-location persons can visually see for themselves from which direction of the location that the estimated speech is coming from, which may be advantageous in particularly if many persons who may potentially speak are present in the location.

The speakerphone is a device specifically configured for performing teleconferences. The speakerphone may comprise a connection means for connecting with a telephone or other device for performing a call. The speakerphone comprises acoustic input transducers, e.g. microphones, and output transducers, e.g. loudspeakers. The speakerphone allows multiple persons to participate in a conversation, both in-location persons who are in the location where the speakerphone is, as well as far-end callers who are in a different location. The output transducers broadcast the voice or voices of those far-end callers on the other end of the call line, while the input transducers captures voices of those in-location persons using the speakerphone. The speakerphone may have multiple input transducers arranged radially around the device to maximize sound input from around a conference table.

The speakerphone is configured for performing a sound quality estimation. The sound quality estimation may be performed continuously or repeatedly during a teleconference. The speakerphone is configured to be arranged at a location and for enabling one or more in-location persons, including at least a first person, to communicate orally with one or more far-end callers. The location may be a room, a meeting room, an office space etc. The speakerphone comprises a housing.

The speakerphone comprises a set of acoustic input transducers, including at least a first acoustic input transducer and a second acoustic input transducer, configured for reception of sound from the location. The acoustic input transducers may be microphones.

The speakerphone comprises one or more acoustic output transducers configured for transmission of sound to the location. The acoustic output transducers may be loudspeakers, speakers etc.

The speakerphone comprises a speech quality estimator configured for estimating a speech quality level of the sound received from the location. The speech quality estimator may be configured for estimating the speech quality level using known algorithms for estimating speech intelligibility based on e.g. speech level, signal-to-noise ratio, signal dynamic range, frequency distribution, etc., and/or using machine learning models trained to perform such estimation.

The speakerphone comprises a visual indicator configured for emitting and/or reflecting light to provide different visual patterns. The visual indicator may comprise or may be one or more light sources, such as light emitting diodes (LEDs), and/or one or more graphic displays, such as LED displays, LCD displays, or the like, that emit and/or reflect light to/from the environment. The visual patterns may be based on color, shape, and other visual attributes. The indicator may further comprise a sound source to give auditory feedback.

The speakerphone comprises a speech detector configured for determining the direction of arrival of speech from one or more of the one or more in-location persons speaking.

The visual indicator is configured to provide at least two different first visual patterns indicating respective directions of arrival of speech determined by the speech detector. A direction of arrival of speech may be indicated by one or more LEDs - or areas of a display - lighting up. For example, if the direction of arrival of speech as determined by the speech detector is to the left of the speakerphone, then one or more LEDs on the left side of the speakerphone may light up. If the direction of arrival of speech as determined by the speech detector is to the right of the speakerphone, then one or more LEDs on the right side of the speakerphone may light up.

The visual indicator is configured to provide at least two different second visual patterns indicating respective speech quality levels estimated by the speech quality estimator. For example, if the speech quality level as estimated by the speech quality estimator is good, then one or more LEDs on the speakerphone may light up in a green color. If the speech quality level as estimated by the speech quality estimator is bad, then one or more LEDs on the speakerphone may light up in an orange or red color.

Thus, the first visual patterns and the second visual patterns may be based on variation of one or more of color, blinking, flashing, lighting up, not lighting up, brightness, intensity, spatial distribution etc.

The acoustic input transducers, the output transducers, the speech quality estimator, the visual indicator and/or the speech detector may be arranged in the speakerphone housing and/or arranged on the speakerphone housing.

The direction of arrival of speech may be determined for more persons at the same time. Thus if two persons are speaking at the same time, the first visual pattern may indicate two different directions of arrival of speech. If more persons are speaking at the same time, the speech quality estimator estimating a speech quality level of the sound received from the location, is likely to determine that the speech quality is bad, because speech quality is generally bad, when more people speak at the same time.

In a teleconference, videoconference or hybrid meeting, the in-locations persons, or near-end participants, often forget about ensuring good voice pick up quality for the far-end participants. The in-locations persons assume the far-end callers can hear them because they can hear the far end ("symmetric sound" syndrome) and/or simply because the far-end callers respond. Near-end participants have few indications of whether they are being heard or not - or how well they are being heard - without interrupting the meeting. Near-end participants are often raising their voices in an online call if they have bad reception, poor sound quality with breakups, silence or with a lot of background noise from the far-end callers. The near-end participants may compensate by talking louder, which may become unpleasant for listeners at the far end. It is a desire of the in-location person that he/she can feel certain that his/her speech can be understood. Thus, it is an advantage of the speakerphone that in-location persons, or the near-end speaker or other near-end participants, will know that transmitted audio should be understandable. It is also an advantage of the speakerphone that the far-end participants will be able to hear the near-end speaker without asking the speaker to move closer or speak louder. It is a further advantage of the speakerphone that the far-end participants will receive a better speech quality from the near-end participants.

The speech quality estimator in the speakerphone signals what is transmitted or sent to the far end callers from the speakerphone. This may not necessarily be the same as what is received by the far end callers as the speakerphone cannot control the transmission channel to the far end callers.

The speakerphone may have a signal processor. The signal processor may be configured to process sound received from the location, e.g. speech from the in-location persons. The signal processor may be configured to process incoming audio signals, e.g. speech from one or more far-end callers. The signal processor may be configured to process outgoing audio signals to the far-end callers. The signal processor may comprise a transmitter/receiver (TX/RX), such as a transceiver, to transmit and/or receive audio signals. The TX/RX may be configured to communicate with an audio gateway and/or with a mobile network for communication to the Internet and/or to a phone network. The audio signals may be configured to be transmitted/received to/from the far-end callers via a call functionality, e.g. Zoom, Teams etc.

The speakerphone may be configured to be connected to an audio gateway device, such as an electronic device, such as a smartphone, tablet, computer, pc etc. The connection may be wireless or wired. The audio gateway device may provide access to an audio communication network, such that the in-location users may communicate orally with far-end callers through the speakerphone, the audio gateway device and the audio communication network.

The speakerphone may be configured to transmit an indication of the estimated speech quality level to the audio gateway device. The speakerphone may be configured to transmit an indication of the direction of arrival of speech to the audio gateway device.

The speakerphone can evaluate the speech quality of sound received from near-end participants or in-location persons that is picked up and transmitted by the speakerphone to the far-end callers. The speakerphone may be able to assess when a speech quality threshold is passed and when the speakerphone fails to pick up the near-end participant in understandable quality. The speakerphone may be able to communicate an event to the audio gateway device (AG) when a speech quality threshold is passed. Such event may result in sensory feedback communicated by the AG and/or the by the visual indicator of the speakerphone, e.g. LEDs. Such event may preferably not be delayed by more than 6 seconds. The speakerphone may communicate an event to the AG in the form of a begin signal and an end signal.

The sensory feedback communicated by an AG may be a visual notification with an option to turn off any further notifications.

The speakerphone may be able to assess the direction of arrival of speech from multiple simultaneous in-location persons speaking. The speakerphone may be able to detect - and refrain from indicating - invalid directions of arrival due to sound reflections.

The speakerphone may be connected with an electronic device, such as a smartphone, tablet, computer, pc etc, optionally also serving as audio gateway device. One or more software applications, so-called apps, may be downloaded on the electronic device. One or more of the software applications may be an app for the speakerphone, for a headset, for a hearing device etc. Some of these apps may be known as Jabra Direct, Jabra Xpress and Jabra Sound+.

The speakerphone may be able to signal an event, when the threshold is passed, to one or more of the apps, e.g. the Jabra Direct app. The app may then notify the user when the speech quality is "low" or "very low".

One or more of the software applications may be an app for the teleconference provider product, such as an app for Microsoft Teams, Zoom etc. The speakerphone may be able to signal an event, when the threshold is passed, to the app.

In the apps, such as Jabra Direct, Jabra Xpress and Jabra Sound+ it may be possible for the user to enable/disable the speech quality estimator.

Furthermore, the speakerphone may be able to signal an event, when the threshold is passed, to the app, such as the Teams, Zoom and potentially other UC clients.

In order to account for the case, that one or more persons are speaking only short phrases, the speakerphone may extend the indication of the direction of arrival of speech and/or the indication of the speech quality level, and/or the signalling of an event by a few seconds, such as by e.g. two, three, or six seconds, so that the short-speaking person(s) have a fair chance to see the respective indications.

The visual indicator indicating the speech quality estimation, may be a visual indicator indicating in 360° visibility. The visual indicator may only be activated when the speakerphone has an active call. The visual indicator may be disabled if a call is on hold. The visual indicator may be disabled when the speakerphone is muted and may resume when the speakerphone is unmuted.

In an embodiment, the speakerphone may comprise one or more input transducers. The one or more input transducers may comprise one or more microphones. Each of the one or more input transducer(s) may be configured for converting an acoustic signal into a respective electric first audio input signal. The first audio input signal may be an analogue signal. The first audio input signal may be a digital signal. The one or more input transducer(s) may be coupled to one or more analogue-to-digital converter(s) configured for converting the analogue first audio input signal into a digital first audio input signal.

In an embodiment, the speakerphone may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may be configured for wireless communication at a second frequency. The second frequency may be below 100 MHz. The second frequency may be between 9 MHz and 15 MHz.

In an embodiment, the speakerphone may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The speakerphone may be configured for wired/wireless audio communication, e.g. enabling the user to listen to media, such as music or radio and/or enabling the user to perform teleconference call, phone calls.

In an embodiment, the wireless signal may originate from one or more external source(s) and/or external devices, such as wireless audio transmitter(s), smart computer(s) and/or distributed microphone array(s) associated with a wireless transmitter. The wireless input signal(s) may origin from one or more accessory device(s), such as a smartphone and/or a smart watch.

The one or more wireless communications unit(s) are configured for wireless data communication, and in this respect interconnected with the one or more antennas for emission and reception of an electromagnetic field. Each of the one or more wireless communication unit may comprise a transmitter, a receiver, a transmitter-receiver pair, such as a transceiver, and/or a radio unit. The one or more wireless communication units may be configured for communication using any protocol as known for a person skilled in the art, including Bluetooth, WLAN standards, manufacture specific protocols, such as tailored proximity antenna protocols, such as proprietary protocols, such as low-power wireless communication protocols, RF communication protocols, magnetic induction protocols, etc. The one or more wireless communication units may be configured for communication using same communication protocols, or same type of communication protocols, or the one or more wireless communication units may be configured for communication using different communication protocols.

The wireless communication unit may connect to the speakerphone signal processor and the antenna, for communicating with one or more external devices, such as one or more external electronic devices, including at least one smart phone, at least one tablet, at least one hearing accessory device, remote control, audio testing device, etc.

The speakerphone may be a device configured for communication with one or more other devices, such as configured for communication with a hearing device or with an accessory device or with a peripheral device.

In an embodiment, the speakerphone may include a processing unit. The processing unit may be configured for processing the first and/or second audio input signal(s). The processing may comprise performing feedback cancelation, beamforming, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide an electric first audio output signal based on the processing of the first and/or second audio input signal(s). The processing unit may be configured to provide an electric second audio output signal. The second audio output signal may be based on the processing of the first and/or second audio input signal(s).

In an embodiment, the speakerphone may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first audio output signal into an acoustic output signal. The output transducer may be coupled to the processing unit via the magnetic antenna.

In an embodiment, the wireless communication unit may be configured for converting the second audio output signal into a wireless output signal. The wireless communication unit may be configured for transmitting the wireless output signal via at least one of the one or more antennas.

In an embodiment, the speakerphone may comprise a digital-to-analogue converter configured to convert the first audio output signal, the second audio output signal and/or the wireless output signal into an analogue signal.

In an embodiment, the speakerphone may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

As an alternative to a power source in the speakerphone, the speakerphone may have a wired connection, such as charging cable, to a power supply in the location.

In an embodiment, the speakerphone may comprise a memory, including volatile and nonvolatile forms of memory.

According to an aspect, disclosed is a method for performing a sound quality estimation in a speakerphone. The speakerphone is configured to be arranged at a location and for enabling one or more in-location persons, including at least a first person, to communicate orally with one or more far-end callers. The method comprises:
- receiving sound from the location by a set of acoustic input transducers, including at least a first acoustic input transducer and a second acoustic input transducer;
- transmitting sound to the location by one or more acoustic output transducers;
- estimating, by a speech quality estimator, a speech quality level of the sound received from the location;
- determining, by a speech detector, the direction of arrival of speech from one or more of the one or more in-location persons speaking;
- emitting and/or reflecting light, by a visual indicator, to provide different visual patterns;
- providing, by the visual indicator, at least two different first visual patterns indicating respective directions of arrival of speech determined by the speech detector;
- providing, by the visual indicator, at least two different first visual patterns indicating respective speech quality levels estimated by the speech quality estimator.

In some embodiments, the speech quality estimator is configured for estimating at least three different levels of speech quality, and wherein the visual indicator is configured to provide at least three different second visual patterns indicating respective speech quality levels.

The visual indicator may have the following three modes: a first mode where the speech quality is a high mode. A second mode where the speech quality is a low mode. A third mode where the speech quality is very low mode.

The first mode, where the speech quality is the high mode, may occur when the speakerphone has an active call and the speech quality level is above the threshold for speech quality high mode. The visual indicator, e.g. LED ring, provides visual feedback. The visual indicator, e.g. LEDs, will emit light in the direction of the voice(s) being picked up and/or in another visual pattern that indicates such direction. The visual indicator may have an indication resolution of 30° which means the speakerphone can indicate 12 different directions when audio is detected. The 12 different indication directions may work independently from each other. They may depend on the directions of the audio the speakerphone picks up and transmits. For example, zero, one, two, three etc. or all 12 LED's can be on at the same time, and/or the visual indicator can emit and/or reflect light in a visual pattern that indicates one, two, three etc. or all 12 directions. The visual indicator, e.g. LED(s), may light in green.

The second mode, where the speech quality is the low mode, may occur when the speakerphone has an active call and the speech quality level is below the threshold for speech quality low mode but above the threshold for speech quality very low mode. The speakerphone may signal an event to the audio gateway (AG). The visual indicator, e.g. LED ring, provides visual feedback. The speech quality low mode may only be active when a voice of barely intelligible speech quality is detected by the speakerphone. The visual indicator, e.g. LEDs, may light yellow omnidirectionally; without indicating the direction of the voice(s) being picked up.

The third mode, where the speech quality is the very low mode, may occur when the speech quality level is below the threshold for the speech quality very low mode. The speakerphone may signal an event to the audio gateway (AG). The visual indicator, e.g. LED ring, provides visual feedback. The speech quality very low mode may only be active when a voice of unintelligible speech quality is detected by the speakerphone. The visual indicator, e.g. LEDs, may pulse omnidirectionally; without indicating the direction of the voice(s) being picked up. The visual indicator, e.g. LED(s), may pulse in orange or red.

Alternatively, the visual indicator is configured to provide at least four different second visual patterns indicating respective speech quality levels.

The visual indicator may have the following four modes: a first mode where the speech quality is a very high mode. A second mode where the speech quality is a high mode. A third mode where the speech quality is a low mode. A fourth mode where the speech quality is a very low mode.

In some embodiments, the speech detector is configured for determining at least three different directions of arrival of speech, and wherein the visual indicator is configured to provide at least three different first visual patterns indicating respective directions of arrival of speech.

The speech detector may be configured for determining at least four, five, six etc. directions of arrival of speech, and the visual indicator may be configured to provide at least four, five, six etc. different first visual patterns indicating respective directions of arrival of speech.

The speech detector may have a detection resolution of 30° which means the speech detector may determine the direction of arrival of speech in 12 different directions when audio is detected. The 12 different directions may work independently from each other. They may depend on the directions of the audio the speakerphone picks up and transmits.

In some embodiments, the visual indicator is configured to indicate the estimated speech quality by controlling one or more of the intensity of emitted and/or reflected light, the color of emitted and/or reflected light, and the temporal emission and/or reflection of light.

The visual indicator may be flashing, blinking, pulsing etc.

The intensity of light may be e.g. very intense, intense or less intense, where very intense may indicate very low speech quality, and intense may indicate low speech quality, and less intense may indicate high speech quality.

The color of light may be e.g. red, yellow and green, where red may indicate very low speech quality, yellow may indicate low speech quality, and green may indicate high speech quality. In some embodiments, the color red may be used to indicate that the microphones of the speakerphone are muted. Accordingly, the color orange, or a flashing yellow color, may be used to indicate very low speech quality.

The temporal emission and/or reflection of light may e.g. be fast variations of the intensity and/or the color of emitted and/or reflected light, medium fast such variations or slow such variations, where fast variations may indicate very low speech quality, and medium fast variations may indicate low speech quality, and slow variations may indicate high speech quality.

In some embodiments, the visual indicator is configured to indicate the direction of arrival of speech by controlling the spatial emission and/or reflection of light. The visual indicator may comprise one or more light sources, such as one or more LEDs, which may be distributed on the speakerphone. The visual indicator may indicate the direction of arrival of speech by controlling which LED(s) that light up, such that an LED located in the direction of arrival of speech lights up.

In some embodiments, the visual indicator is configured to simultaneously indicate at least two different directions of arrival of respective speech by controlling the spatial emission and/or reflection of light. If two in-location persons are speaking at the same time, the visual indicator may simultaneously indicate both directions of arrival of speech, e.g. by lighting up a first LED located in the direction of the first person speaking and by lighting up a second LED located in the direction of the second person speaking.

In some embodiments, the visual indicator comprises multiple light sources for emitting the light. The light sources may be light emitting diodes (LEDs), such as multiple LEDs with different colours, red-green-blue (RGB) LEDs or red-green-blue-white (RGBW) LEDs.

In some embodiments, the multiple light sources are distributed across an upper and/or radially outer surface of the housing of the speakerphone. Thereby, the light sources are visible by the in-locations persons and may, due to their individual locations relative to the housing, be used to indicate directions in a manner that is intuitively understood by the in-locations persons.

In some embodiments, the multiple light sources are distributed in a pattern corresponding to an outer rim of the housing of the speakerphone. The speakerphone housing may e.g. be round, oval, rectangular, square, oblong, triangular etc. Thus, the light sources may be distributed in a round, oval, rectangular, square, oblong, triangular etc. pattern on housing of the speakerphone. The speakerphone may comprise an LED ring of multiple red-green-blue (RGB) LEDs or multiple red-green-blue-white (RGBW) LEDs to indicate if the in-location person's voice is being heard and transmitted by the speakerphone and/or the direction of arrival of detected speech.

In some embodiments, the set of acoustic input transducers comprises at least three, at least four, or at least six acoustic input transducers.

In some embodiments, the speech detector comprises one or more beamformers operating on outputs of the set of acoustic input transducers, and wherein the speech detector is configured for determining the direction of arrival of speech from one or more of the one or more in-location persons speaking based on one or more outputs from the one or more beamformers.

In some embodiments, the speech quality estimator is configured for estimating the speech quality level of the sound received from the location based on one or more outputs from the one or more beamformers.

In some embodiments, the speech quality estimator is configured for estimating the speech quality level to be one of a set of levels comprising at least: a very high speech quality level, a high speech quality level, a low speech quality level, and a no-speech level.

Alternatively, the speech quality estimator is configured for estimating the speech quality level to be one of a set of levels comprising at least: a high speech quality level, a low speech quality level, and a very low speech quality level.

In some embodiments, the speakerphone is configured to be connected to an audio gateway device providing access to an audio communication network, and wherein the speakerphone is configured to transmit an indication of the estimated speech quality level and/or the direction of arrival of speech to the audio gateway device. The audio gateway device may comprise a display which is configured to visually show the indication of the estimated speech quality level and/or the direction of arrival of speech. Thus, the audio gateway device (AG) may have a display or may be connected with a display. The display may be associated with an electronic device running the app of the call functionality, e.g. the video conference, or teleconference, such as Teams, Zoom etc. It is an advantage to also show the estimated speech quality level and/or the direction of arrival of speech on a display different from the speakerphone housing. The display may be a screen showing the visual part of the videoconference, and/or may be a screen of an in-location person's pc, where the pc may be running the videoconference or teleconference. Thus, as the in-location person(s) may be more focused on the display than on the speakerphone, it is an advantage to also show the estimated speech quality level and/or the direction of arrival of speech on the display.

The present invention relates to different aspects including the speakerphone and the method described above and in the following, and corresponding systems, devices, device parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an exemplary speakerphone configured for performing a sound quality estimation.
Fig. 2 schematically illustrates an exemplary diagram of the components and connections in the speakerphone.
Fig. 3a) and 3b) schematically illustrate an exemplary determination by the speakerphone of directions of arrival of speech in a location.
Fig. 4a), 4b), 4c), 4d) schematically illustrates an exemplary visual indicator of the speakerphone configured for emitting and/or reflecting light to provide different visual patterns.
Fig. 5 schematically illustrate an exemplary speakerphone, such as the speakerphone of figs. 1-4, configured to be connected to an audio gateway device providing access to an audio communication network.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Features and/or reference numbers may be mentioned in the description of a figure but may not be shown in the figure, however the features and/or reference numbers mentioned may refer to equal or similar features and/or reference numbers shown in previous and/or subsequent figures.

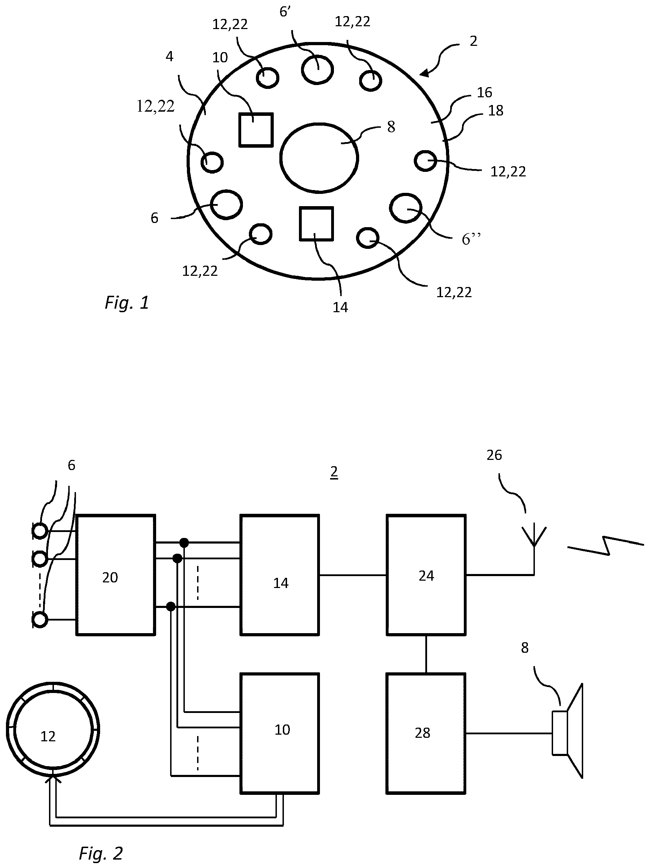

Fig. 1 schematically illustrates an exemplary speakerphone 2 configured for performing a sound quality estimation. The speakerphone 2 is configured to be arranged at a location and for enabling one or more in-location persons, including at least a first person, to communicate orally with one or more far-end callers. The speakerphone 2 comprises a housing 4. The speakerphone 2 comprises a set of acoustic input transducers 6, including at least a first acoustic input transducer 6' and a second acoustic input transducer 6", configured for reception of sound from the location. The speakerphone 2 comprises one or more acoustic output transducers 8 configured for transmission of sound to the location. The speakerphone 2 comprises a speech quality estimator 10 configured for estimating a speech quality level of the sound received from the location. The speakerphone 2 comprises a visual indicator 12 configured for emitting and/or reflecting light to provide different visual patterns. The speakerphone 2 comprises a speech detector 14 configured for determining the direction of arrival of speech from one or more of the one or more in-location persons speaking. The visual indicator 12 is configured to provide at least two different first visual patterns indicating respective directions of arrival of speech determined by the speech detector 14. The visual indicator 12 is configured to provide at least two different second visual patterns indicating respective speech quality levels estimated by the speech quality estimator 10.

The visual indicator 12 comprises multiple light sources 22 for emitting the light.

The multiple light sources 22 are distributed across an upper and/or radially outer surface 16 of the housing 4 of the speakerphone 2.

The multiple light sources 22 are distributed in a pattern corresponding to an outer rim 18 of the housing 4 of the speakerphone 2.

The set of acoustic input transducers 6 comprises three acoustic input transducers 6 in fig. 1, however more or less acoustic input transducers may be provided, such as four, five, six, 12 etc.

Fig. 2 schematically illustrates an exemplary diagram of the components and connections in the speakerphone.

The speakerphone 2 comprises a speech quality estimator 10 configured for estimating a speech quality level of the sound received from the location. The speakerphone 2 comprises a visual indicator 12 configured for emitting and/or reflecting light to provide different visual patterns. The speakerphone 2 comprises a speech detector 14 configured for determining the direction of arrival of speech from one or more of the one or more in-location persons speaking.

The speakerphone 2 may comprise one or more beamformers 20. The one or more beamformers 20 may be a part of the speech detector 14. Thus the speech detector 14 may comprise the one or more beamformers 20. The one or more beamformers 20 may be operating on outputs of the set of acoustic input transducers 6. Thus, the one or more beamformers 20 may be connected with the acoustic input transducers 6. The speech detector 14 may be configured for determining the direction of arrival of speech from the one or more in-location persons speaking based on one or more outputs from the one or more beamformers 20. Thus, the speech detector 14 may be connected with the one or more beamformers 20.

The speech quality estimator 10 may be configured for estimating the speech quality level of the sound received from the location based on one or more outputs from the one or more beamformers 20. Thus, the speech quality estimator 10 may be connected with the one or more beamformers 20, and/or the speech quality estimator 10 may be connected with the one or more outputs from the one or more beamformers 20, and/or the speech quality estimator 10 may be connected with the speech detector 14. The speech quality estimator 10 may be configured for estimating the speech quality level using known algorithms for estimating speech intelligibility based on e.g. speech level, signal-to-noise ratio, signal dynamic range, frequency distribution, etc., and/or using machine learning models trained to perform such estimation.

The visual indicator 12 is configured to provide at least two different first visual patterns indicating respective directions of arrival of speech determined by the speech detector 14. The visual indicator 12 is configured to provide at least two different second visual patterns indicating respective speech quality levels estimated by the speech quality estimator 10. Thus, the visual indicator 12 may be connected with the speech quality estimator 10.

The speakerphone 2 may comprise a transceiver 24. The transceiver 24 may be connected to the speech detector 14 for receiving one or more audio signals comprising sound picked up from the location, e.g. the speech of the in-locations persons. The transceiver 24 may be connected to an antenna 26 for transmitting the sound from the location to the one or more far-end callers. The transceiver 24 connected to the antenna 26 may be configured for receiving sound from the far-end caller(s). The transceiver 24 may be connected to an echo canceller 28. The echo canceller 28 may be connected with an acoustic output transducer 8 for outputting sound based on audio signals received from the far-end caller(s).

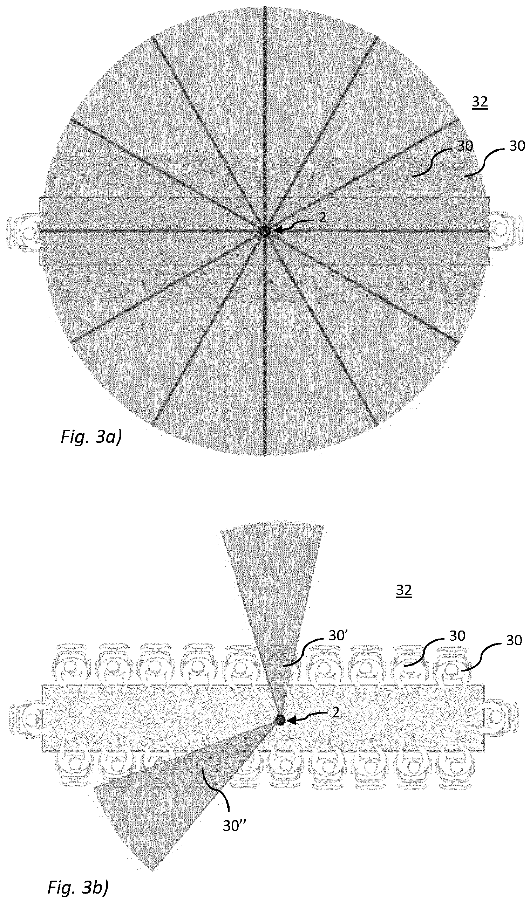

Fig. 3a) and 3b) schematically illustrate an exemplary determination of directions of arrival of speech in a location.

The speakerphone 2 comprises a speech detector configured for determining the direction of arrival of speech from one or more of the one or more in-location persons 30 speaking. The speech detector may be configured for determining the direction of arrival of speech from the one or more in-location persons 30 speaking based on one or more outputs from one or more beamformers 20 operating on outputs of the set of acoustic input transducers 6.

The visual indicator 12 is configured to provide at least two different first visual patterns indicating respective directions of arrival of speech determined by the speech detector 14.

The speech detector 14 is configured for determining at least three directions of arrival of speech. The visual indicator 12 is configured to provide at least three different first visual patterns indicating respective directions of arrival of speech.

The visual indicator 12 is configured to indicate the direction of arrival of speech by controlling the spatial emission and/or reflection of light.

The visual indicator 12 is configured to simultaneously indicate at least two different directions of arrival of respective speech by controlling the spatial emission and/or reflection of light.

Fig. 3a) schematically illustrate an exemplary determination of directions of arrival of speech in a location 32. In fig. 3a), the speakerphone 2 may refrain from, and/or not be able to, determining the direction of arrival of speech, e.g. because several in-location persons 30 are speaking at the same time. The radial lines originating from the speakerphone 2 in the center of the location 30 illustrates that speech may in this case be determined to arrive from all of the illustrated 12 directions.

Fig. 3b) schematically illustrate an exemplary determination of directions of arrival of speech in a location 32. In fig. 3b), the speakerphone 2 may determine speech to simultaneously arrive from two different directions, one direction "north" of the speakerphone 2, and another direction "south-west" of the speakerphone, for instance when two in-location persons 30' and 30" are speaking at the same time.

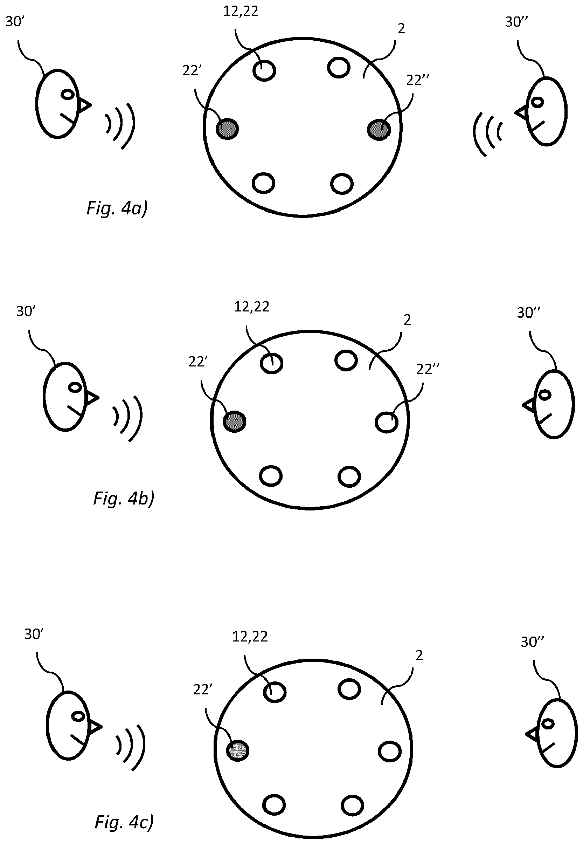

Fig. 4a), 4b), 4c), 4d) schematically illustrates an exemplary visual indicator configured for emitting and/or reflecting light to provide different visual patterns. The visual indicator 12 comprises multiple light sources 22 for emitting the light.

Fig. 4a) and fig. 4b) schematically illustrate the visual indicator 12 being configured to provide at least two different first visual patterns indicating respective directions of arrival of speech determined by the speech detector.

In fig. 4a) two in-location persons 30', 30" are speaking at the same time. The speakerphone 2 controls the first light source 22' to light up when the first person 30' is speaking. The speakerphone 2 controls the second light source 22" to light up when the second person 30" is speaking. The speakerphone 2 may control the first light source 22' and the second light source 22" to light up at the same time.

Fig. 4b) shows an example where only one in-location person 30' is speaking. The first light source 22' lights up when the first person 30' is speaking. The second light source 22" does not light up as the second person 30" is not speaking.

Fig. 4c) and 4d) schematically illustrate the visual indicator 12 being configured to provide at least two different second visual patterns indicating respective speech quality levels estimated by the speech quality estimator.

The speech quality estimator may be configured for estimating at least three different levels of speech quality. The speech quality estimator may be configured for estimating the speech quality level to be one of a set of levels comprising at least: a high speech quality level, a low speech quality level, a very low speech quality level.

The visual indicator 12 may be configured to provide at least three different second visual patterns indicating respective speech quality levels.

The visual indicator 12 is configured to indicate the estimated speech quality by controlling one or more of the intensity of emitted and/or reflected light, the color of emitted and/or reflected light, and the temporal emission and/or reflection of light.

Fig. 4c) shows one in-location person 30' is speaking. If the estimated speech quality is a high, then the first light source 22' may light up in green color.

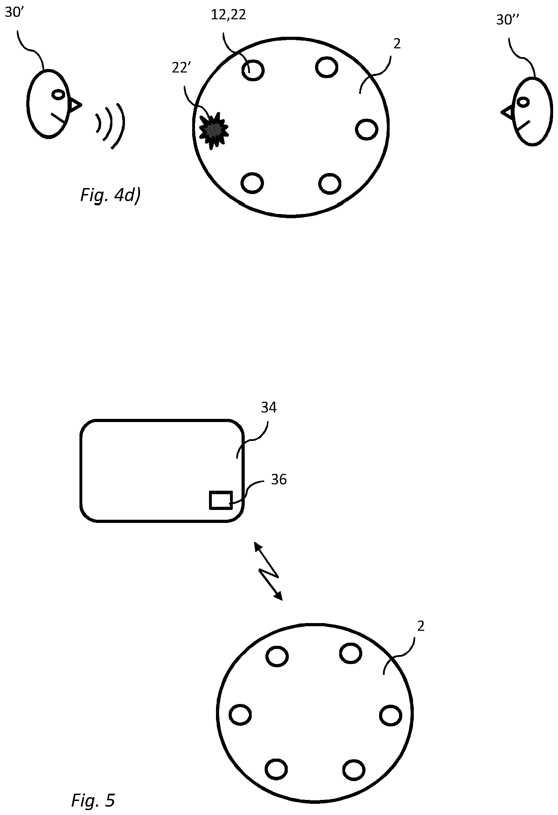

Fig. 4d) shows one in-location person 30' is speaking. If the estimated speech quality is a low (or very low), then the first light source 22' may flash in yellow, orange or red color.

Fig. 5 schematically illustrate an exemplary speakerphone configured to be connected to an audio gateway device providing access to an audio communication network.

The speakerphone 2 may be configured to be connected to an audio gateway device 34 providing access to an audio communication network. The speakerphone 2 is configured to transmit an indication of the estimated speech quality level and/or the direction of arrival of speech to the audio gateway device 34. The audio gateway device 34 may comprise a display 36, which is configured to visually show the indication of the estimated speech quality level and/or the direction of arrival of speech.

In all examples of speakerphones described herein, the visual indication of the estimated speech quality level and/or the indication of the direction of arrival of speech may be accomplished by the speakerphone controlling one or more light emitting elements, such as e.g. LED, pixels of LED displays or LCD displays with backlight, and/or one or more light reflecting elements, such as e.g. pixels of LCD displays without backlight, to change their visual appearance, such as brightness, reflection coefficient and colour, as well as spatial or temporal distribution hereof. Correspondingly, controlling the spatial emission and/or reflection of light may comprise controlling such elements in dependence on their location relative to the speakerphone housing, and/or to emit and/or reflect light in different directions. Also, controlling the temporal emission and/or reflection of light may comprise controlling such elements to vary their visual appearance over time.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A speakerphone configured for performing a sound quality estimation, the speakerphone is configured to be arranged at a location and for enabling one or more in-location persons, including at least a first person, to communicate orally with one or more far-end callers, the speakerphone comprising:
   - a housing;
   - a set of acoustic input transducers, including at least a first acoustic input transducer and a second acoustic input transducer, configured for reception of sound from the location;
   - one or more acoustic output transducers configured for transmission of sound to the location;
   - a speech quality estimator configured for estimating a speech quality level of the sound received from the location;
   - a visual indicator configured for emitting and/or reflecting light to provide different visual patterns;
   - a speech detector configured for determining the direction of arrival of speech from one or more of the one or more in-location persons speaking;

   wherein the visual indicator is configured to provide at least two different first visual patterns indicating respective directions of arrival of speech determined by the speech detector;
   wherein further, the visual indicator is configured to provide at least two different second visual patterns indicating respective speech quality levels estimated by the speech quality estimator.
2. The speakerphone according to item 1, wherein the speech quality estimator is configured for estimating at least three different levels of speech quality, and wherein the visual indicator is configured to provide at least three different second visual patterns indicating respective speech quality levels.
3. The speakerphone according to items 1 or 2, wherein the speech detector is configured for determining at least three different directions of arrival of speech, and wherein the visual indicator is configured to provide at least three different first visual patterns indicating respective directions of arrival of speech.
4. The speakerphone according to any of the preceding items, wherein the visual indicator is configured to indicate the estimated speech quality by controlling one or more of the intensity of emitted and/or reflected light, the color of emitted and/or reflected light, and the temporal emission and/or reflection of light.
5. The speakerphone according to any of the preceding items, wherein the visual indicator is configured to indicate the direction of arrival of speech by controlling the spatial emission and/or reflection of light.
6. The speakerphone according to any of the preceding items, wherein the visual indicator is configured to simultaneously indicate at least two different directions of arrival of respective speech by controlling the spatial emission and/or reflection of light.
7. The speakerphone according to any of the preceding items, wherein the visual indicator comprises multiple light sources for emitting the light.
8. The speakerphone according to the preceding item, wherein the multiple light sources are distributed across an upper and/or radially outer surface of the housing of the speakerphone.
9. The speakerphone according to the preceding item, wherein the multiple light sources are distributed in a pattern corresponding to an outer rim of the housing of the speakerphone.
10. The speakerphone according to any of the preceding items, wherein the set of acoustic input transducers comprises at least three, at least four, or at least six acoustic input transducers.
11. The speakerphone according to any of the preceding items, wherein the speech detector comprises one or more beamformers operating on outputs of the set of acoustic input transducers, and wherein the speech detector is configured for determining the direction of arrival of speech from one or more of the one or more in-location persons speaking based on one or more outputs from the one or more beamformers.
12. The speakerphone according to the preceding item, wherein the speech quality estimator is configured for estimating the speech quality level of the sound received from the location based on one or more outputs from the one or more beamformers.
13. The speakerphone according to any of the preceding items, wherein the speech quality estimator is configured for estimating the speech quality level to be one of a set of levels comprising at least: a very high speech quality level, a high speech quality level, a low speech quality level, and a no-speech level,
14. The speakerphone according to any of the preceding items, wherein the speakerphone is configured to be connected to an audio gateway device providing access to an audio communication network, and wherein the speakerphone is configured to transmit an indication of the estimated speech quality level and/or the direction of arrival of speech to the audio gateway device.
15. A method for performing a sound quality estimation in a speakerphone, the speakerphone is configured to be arranged at a location and for enabling one or more in-location persons, including at least a first person, to communicate orally with one or more far-end callers, the method comprises:
   - receiving sound from the location by a set of acoustic input transducers, including at least a first acoustic input transducer and a second acoustic input transducer;
   - transmitting sound to the location by one or more acoustic output transducers;
   - estimating, by a speech quality estimator, a speech quality level of the sound received from the location;
   - determining, by a speech detector, the direction of arrival of speech from one or more of the one or more in-location persons speaking;
   - emitting and/or reflecting light, by a visual indicator, to provide different visual patterns;
   - providing, by the visual indicator, at least two different first visual patterns indicating respective directions of arrival of speech determined by the speech detector;
   - providing, by the visual indicator, at least two different first visual patterns indicating respective speech quality levels estimated by the speech quality estimator.

### LIST OF REFERENCES

2 speakerphone
4 housing
6 set of acoustic input transducers
6' first acoustic input transducer
6" second acoustic input transducer
8 acoustic output transducer(s)
10 speech quality estimator
12 visual indicator
14 speech detector
16 outer surface of the housing
18 outer rim of the housing
20 beamformer(s)
22 light sources
22' first light source
22"second light source
24 transceiver
26 antenna
28 echo canceller
30 in-location persons
30' first in-location person
30" second in-location person
32 location
34 audio gateway device
36 display

## Claims

1. A speakerphone configured for performing a sound quality estimation, the speakerphone is configured to be arranged at a location and for enabling one or more in-location persons, including at least a first person, to communicate orally with one or more far-end callers, the speakerphone comprising:
- a housing;
- a set of acoustic input transducers, including at least a first acoustic input transducer and a second acoustic input transducer, configured for reception of sound from the location;
- one or more acoustic output transducers configured for transmission of sound to the location;
- a speech quality estimator configured for estimating a speech quality level of the sound received from the location;
- a visual indicator configured for emitting and/or reflecting light to provide different visual patterns;
- a speech detector configured for determining the direction of arrival of speech from one or more of the one or more in-location persons speaking;
wherein the visual indicator is configured to provide at least two different first visual patterns indicating respective directions of arrival of speech determined by the speech detector;
wherein further, the visual indicator is configured to provide at least two different second visual patterns indicating respective speech quality levels estimated by the speech quality estimator.

2. The speakerphone according to claim 1, wherein the speech quality estimator is configured for estimating at least three different levels of speech quality, and wherein the visual indicator is configured to provide at least three different second visual patterns indicating respective speech quality levels.

3. The speakerphone according to claim 1 or 2, wherein the speech detector is configured for determining at least three different directions of arrival of speech, and wherein the visual indicator is configured to provide at least three different first visual patterns indicating respective directions of arrival of speech.

4. The speakerphone according to any of the preceding claims, wherein the visual indicator is configured to indicate the estimated speech quality by controlling one or more of the intensity of emitted and/or reflected light, the color of emitted and/or reflected light, and the temporal emission and/or reflection of light.

5. The speakerphone according to any of the preceding claims, wherein the visual indicator is configured to indicate the direction of arrival of speech by controlling the spatial emission and/or reflection of light.

6. The speakerphone according to any of the preceding claims, wherein the visual indicator is configured to simultaneously indicate at least two different directions of arrival of respective speech by controlling the spatial emission and/or reflection of light.

7. The speakerphone according to any of the preceding claims, wherein the visual indicator comprises multiple light sources for emitting the light.

8. The speakerphone according to the preceding claim, wherein the multiple light sources are distributed across an upper and/or radially outer surface of the housing of the speakerphone.

9. The speakerphone according to the preceding claim, wherein the multiple light sources are distributed in a pattern corresponding to an outer rim of the housing of the speakerphone.

10. The speakerphone according to any of the preceding claims, wherein the set of acoustic input transducers comprises at least three, at least four, or at least six acoustic input transducers.

11. The speakerphone according to any of the preceding claims, wherein the speech detector comprises one or more beamformers operating on outputs of the set of acoustic input transducers, and wherein the speech detector is configured for determining the direction of arrival of speech from one or more of the one or more in-location persons speaking based on one or more outputs from the one or more beamformers.

12. The speakerphone according to the preceding claim, wherein the speech quality estimator is configured for estimating the speech quality level of the sound received from the location based on one or more outputs from the one or more beamformers.

13. The speakerphone according to any of the preceding claims, wherein the speech quality estimator is configured for estimating the speech quality level to be one of a set of levels comprising at least: a very high speech quality level, a high speech quality level, a low speech quality level, and a no-speech level,

14. The speakerphone according to any of the preceding claims, wherein the speakerphone is configured to be connected to an audio gateway device providing access to an audio communication network, and wherein the speakerphone is configured to transmit an indication of the estimated speech quality level and/or the direction of arrival of speech to the audio gateway device.

15. A method for performing a sound quality estimation in a speakerphone, the speakerphone is configured to be arranged at a location and for enabling one or more in-location persons, including at least a first person, to communicate orally with one or more far-end callers, the method comprises:
- receiving sound from the location by a set of acoustic input transducers, including at least a first acoustic input transducer and a second acoustic input transducer;
- transmitting sound to the location by one or more acoustic output transducers;
- estimating, by a speech quality estimator, a speech quality level of the sound received from the location;
- determining, by a speech detector, the direction of arrival of speech from one or more of the one or more in-location persons speaking;
- emitting and/or reflecting light, by a visual indicator, to provide different visual patterns;
- providing, by the visual indicator, at least two different first visual patterns indicating respective directions of arrival of speech determined by the speech detector;
- providing, by the visual indicator, at least two different first visual patterns indicating respective speech quality levels estimated by the speech quality estimator.
